# DEMANDE DE BREVET EUROPEEN

(11) **EP 0 628 243 A1**
(43) Date de publication de la demande: **14.12.1994**
(21) Numéro de dépôt: 94401298.8
(22) Date de dépôt: 09.06.1994
(51) Int. Cl.: A01G 31/00

(54) **Système de culture hors sol et procédé de réutilisation d'un tel système**

(30) Priorité: 09.06.1993 FR 9306902
(71) Demandeur: ISOVER SAINT-GOBAIN, F-92400 Courbevoie (FR)
(72) Inventeur: Landa Del Castillo, Felipe, E-04720 Agualuce (Almeria) (ES)
(74) Mandataire: Debay, Yves

(57) **Abrégé**

La présente invention concerne un système de culture hors sol, constitué d'un substrat (1) minéral ou organique, destiné à recevoir plusieurs un ou plusieurs plants disposés sur la face supérieure (37) du substrat, le substrat étant gainé dans un film polymère étanche (3) caractérisé en ce que la gaine (3) se prolonge dans le sens de la pente du sol sur lequel est posé le pain par une extrémité (340, 310, 330, 32), comportant au moins une face (340) dans le prolongement de la face inférieure (34) du substrat (1) et de dimension suffisante pour permettre son repliement et son maintien sur la face supérieure adjacente (11) du substrat afin de stopper le drainage et comporte des moyens de maintien des fentes de drainage à la face supérieure du substrat.

## Description

La présente invention concerne un système de culture hors sol et le procédé de réutilisation d'un tel système.

Il est connu dans les systèmes de culture hors sol de l'art antérieur d'effectuer l'élevage de plants à partir de semis ou de bouturages sur des bouchons et/ou des cubes. Un ou plusieurs plants sont ensuite placés sur les pains et espacés de façon régulière. Le nombre de plants par pain est variable selon les espèces cultivées et les conditions de culture. Pendant la culture une solution nutritive est apportée au niveau de chaque plant par un système de goutte à goutte. Les substrats formant les bouchons, cubes et pains sont constitués de matériau divers tels que des laines minérales, des mousses phénoliques, de la perlite, de l'argile expansé, des matériaux organiques à base de tourbe, etc... Les pains sont souvent enveloppés dans une gaine (3) de film polymère tel que le polyéthylène ou le polychlorure de vinyle etc... Le film est étanche et la gaine formée par le film épouse la forme parallélépipèdique du substrat.

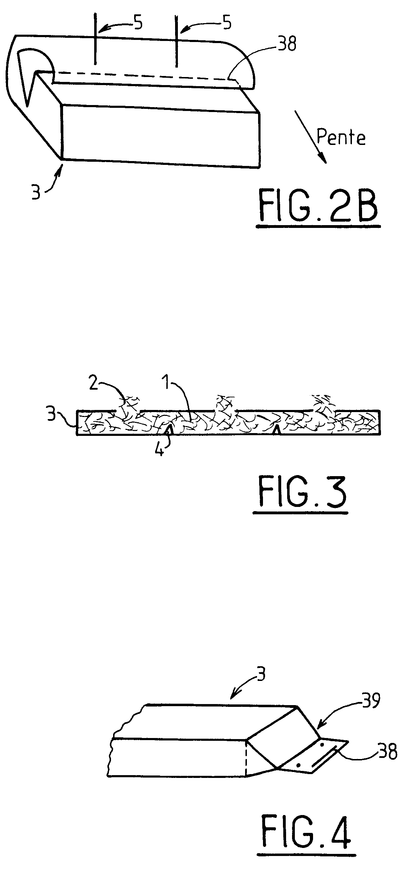

Lors de la mise en place des substrats dans la serre, le substrat est saturé en solution nutritive pendant quelques jours. Cette saturation initiale a pour but d'humidifier la totalité du volume du substrat. Une telle saturation est nécessaire pour que la solution nutritive apportée ultérieurement par l'irrigation localisée effectuée au goutte à goutte au cours de la culture soit répartie de façon homogène dans la totalité du volume du substrat. L'étanchéité de la gaine facilite la saturation initiale du substrat. La gaine permet d'éviter le déssèchement du pain au cours de la culture. Par ailleurs, l'opacité de la gaine restreint le développement d'algues et sa couleur blanche permet de refléter la lumière sur les parties aériennes de la plante; Comme représenté à la figure 3, des fentes (4) sont pratiquées dans la gaine par l'horticulteur lors de la transplantation des bouchons ou cubes (2) sur le substrat (1) pour assurer le drainage de l'excès de solution nutritive. Les substrats reposent sur un sol ayant une légère pente : on pratique au moins une pente de drainage au point le plus bas du substrat.

Dans l'art antérieur, à la fin d'une culture, les pains usagés sont remplacés par de nouveaux substrats. Cependant, pour des raisons économiques il arrive que des producteurs utilisent le même pain de culture la saison suivante. Entre deux cultures les pains sont parfois laissés en place sans traitement : dans ce cas les substrats se déssèchent et il est difficile de les ré-humecter notamment à cause de la présence des fentes (4) de drainage. Dans la plupart des cas les pains sont désinfectés avant d'être ré-utilisés pour une deuxième culture. Les étapes de préparation des pains entre les deux cultures sont alors les suivantes:
- retrait de la gaine (3) en film polymère entourant les substrats (1) ;
- séchage des substrats (1) ;
- empilage des substrats (1) puis couverture des substrats à l'aide d'une bâche étanche ;
- stérilisation des substrats (1) à la vapeur ;
- ré-engainage des substrats (1)
- mise en place des substrats (1) nouvellement ré-engainés dans la serre ;
- saturation des substrats (1) puis entaillage (4) des gaines (3).

Tous les travaux constituants ces étapes sont coûteux en main-d'oeuvre et longs . Le remouillage des substrats est consommateur de temps, ce qui est incompatible avec le temps limité dont dispose l'horticulteur entre deux cultures.

L'invention a donc pour but principal d'éliminer les inconvénients de l'art antérieur.

Ce but est atteint par le fait que le système de culture hors sol, constitué d'un substrat minéral ou organique est destiné à recevoir un ou plusieurs plants disposés sur la face supérieure, le substrat étant gainé dans un film polymère étanche qui se prolonge dans le sens de la pente sur lequel est posé le substrat par un prolongement de dimension suffisante pour permettre son repliement sur la face supérieure de l'extrémité adjacente du substrat afin de stopper le drainage et comporte des moyens de maintien du prolongement de la gaine dans cette position.

Selon une autre particularité, les moyens de maintien sont constitués par un piquet.

Selon une autre particularité, les moyens de maintien sont du type adhésif.

Selon une autre particularité, les moyens de maintien sont constitués par une soudure réalisée sur le prolongement de la gaine entre le substrat et les fentes.

Selon une autre particularité, les moyens de maintien sont constitués par un lien fixé sur les côtés du pain à proximité de l'extrémité et destinés à être noués soit sur la face supérieure du substrat, soit sur la face latérale extrême.

Selon une autre particularité, les moyens de maintien sont du type "velcro".

Selon une autre particularité, les moyens de maintien sont constitués par une anse dans laquelle vient se glisser le prolongement de la gaine après qu'il ait été replié.

Selon une autre particularité, un cordon passé dans un rebord en forme d'ourlet formé à l'extrémité de la gaine qui se prolonge au-delà du pain est utilisé pour fermer cette dernière.

Selon une autre particularité, le prolongement de la gaine a la forme d'un coin dont au moins une face est dans le prolongement de la face inférieure du substrat et la face opposée en biseau.

Un autre but est de proposer un procédé d'utilisation permettant une réutilisation du système de culture.

Ce but est atteint par le fait que le procédé d'utilisation comporte les étapes suivantes :
- mise en saturation du substrat ;
- découpe d'une fente dans le prolongement ; et,
- en fin d'utilisation fermeture du prolongement de la gaine et maintien de ce prolongement sur la face supérieure du substrat.

Un autre but de l'invention est de proposer un procédé de réutilisation du système de culture hors sol selon l'invention permettant une réutilisation plus rapide pour l'horticulteur.

Ce but est atteint par le fait que le procédé de réutilisation du système selon l'invention comporte, après une première utilisation du système pour la culture hors sol, les étapes suivantes :
- pliage du prolongement de la gaine du système permettant de positionner la fente de drainage sur la face supérieure de la gaine ;
- saturation du substrat à l'aide d'un liquide désinfectant si stérilisation ;
- fermeture de l'extrémité de la gaine pour mise en saturation ;
- dépliage du prolongement de la gaine pour drainage.
- rinçage du pain à l'eau claire ;

D'autres caractéristiques et avantages de la présente invention apparaîtront plus clairement à la lecture de la description ci-après faite en référence aux dessins annexés dans lesquels :
- la figure 1A représente une vue en perspective du système de culture selon un premier mode de réalisation de l'invention ;
- la figure 1B représente une vue en perspective du système de culture selon un deuxième mode de réalisation de l'invention ;
- la figure 2A représente une vue partielle du système de culture selon l'invention lors de sa mise en saturation ;
- la figure 2B représente un autre moyen de maintien pour la mise en saturation ;
- la figure 3 représente le schéma de principe des systèmes de culture de l'art antérieur ;
- la figure 4 représente une autre variante d'un moyen de maintien pour la mise en saturation.

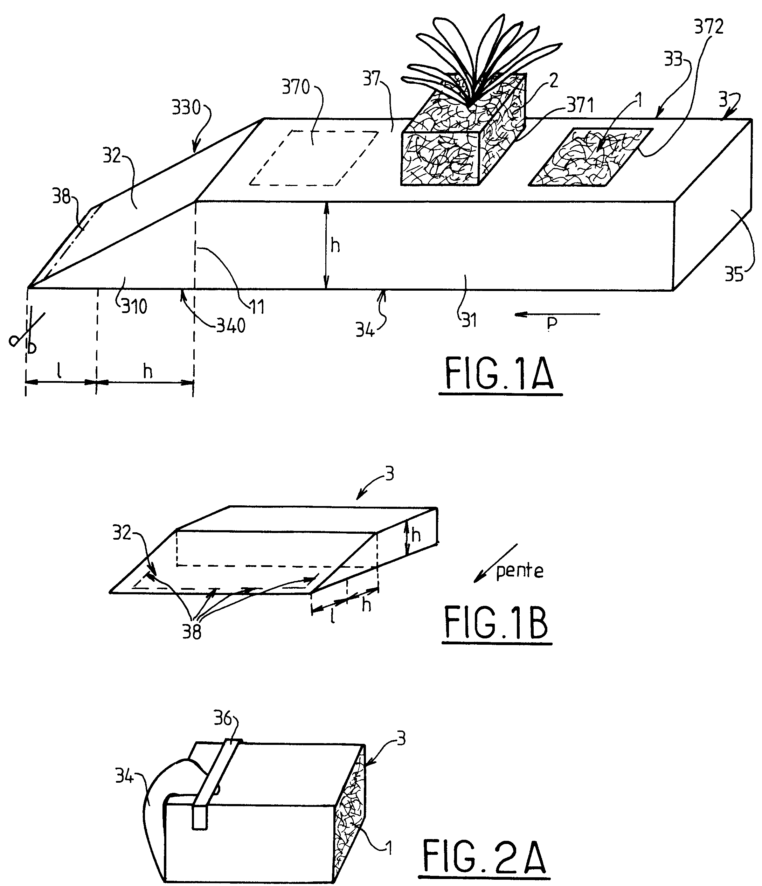

L'invention est constituée, comme représenté à la figure 1, par un substrat (1) formé de matériaux divers, tels que de la laine minérale, de la mousse phénolique, de la perlite, de l'argile expansé, des matériaux organiques à base de tourbe, etc..., ou d'un mélange de ces différents matériaux. Le substrat (1) est entouré d'une gaine (3) constituée d'un film polymère étanche blanc sur sa face supérieure (37). La gaine est formée des faces supérieure (37) et inférieure (34), des deux faces latérales (31,33), d'une face extrême (35) perpendiculaire à ces faces latérales, supérieures et inférieures. Dans la variante de réalisation de la figure 1A, la gaine (3) se prolonge à l'autre extrémité du substrat (1) matérialisée par la ligne en pointillés (11) par un prolongement formé des surfaces inférieures (340) qui se trouvent dans le prolongement de la face inférieure (34) du substrat, des faces latérales (310) et (330) dans le prolongement, respectivement des faces latérales (31) et (33) du substrat et d'une face (32) qui est inclinée par rapport à la face supérieure (37). Dans le sens de la pente du sol sur lequel est posé le substrat, la gaine a un prolongement de dimension (h + l) suffisante pour que, repliée, les fentes (38) de drainage se trouvent à la face supérieure du substrat. La fente de drainage est réalisée dans le prolongement à une distance supérieure à la hauteur (h) du substrat dans la gaine (3). Eventuellement, une ligne de découpes pré-amorcée (38) permet de réaliser la fente de drainage selon l'invention.

Selon la variante de réalisation de la figure 1B, le prolongement, de dimension (h + l) supérieure à la hauteur du substrat est disposé dans le sens de la largeur du substrat alors que pour la figure 1A il est disposé dans le sens de la longueur. Comme précédemment, les fentes de drainage (38) sont effectuées dans le prolongement à une distance supérieure à la hauteur (h) du substrat (1).

Pour la première saturation du substrat, les fentes de drainage de la gaine ne sont pas encore réalisées : la gaine est alors étanche et le pain est saturé d'eau.

Lorsque la transplantation est effectuée et que les cubes (2) sont mis en place sur le substrat des fentes de drainage sont ouvertes, selon la ligne (38), de façon à assurer un drainage du substrat qui est disposé sur un plan légèrement incliné, selon la direction de la flèche (P), direction qui est parallèle soit à l'axe longitudinal du pain, soit à l'axe de la largeur du substrat (figure 1B) pour favoriser le drainage.

Entre les deux cultures le prolongement de la gaine comportant les fentes de drainage est replié et maintenu dans cette position à l'aide des moyens évoqués ci-dessus. Les fentes de drainage se situent alors sur la face supérieure du substrat, de façon à stopper le drainage et éviter le déssèchement du pain. Eventuellement, le substrat (1) peut alors être stérilisé en place à l'aide d'un liquide désinfectant, du chlore, de l'eau de javel, de l'eau oxygénée, etc... Après dépliage du prolongement de la gaine et quelques arrosages à l'eau claire qui permettent de rincer le désinfectant, le pain est prêt pour une seconde culture.

Le maintien du prolongement peut être effectué par tout moyen, tel qu'un piquet (5), figure 2B, une surface adhésive disposée aux emplacements adéquats, ou des éléments "velcro" également disposés aux emplacements adéquats, ou à l'aide d'un lien fixé sur les côtés (31, 33), à proximité de l'extrémité (11) du pain et destiné à être noué sur la face supérieure (37) pour maintenir l'extrémité du prolongement (340, 310, 32, 330) appliquée sur la face supérieure (37) du substrat, comme représenté à la figure 2. Le lien pourra également être noué sur la face latérale extrême (11) ou être constitué, comme représenté à la figure 2, par une anse (36) sur la face supérieure dans laquelle on viendra glisser le prolongement après l'avoir rabattu contre le côté extrême (11) du pain.

Un autre moyen de maintien peut consister à pratiquer une soudure (39) du prolongement dans l'espace situé entre le substrat (1) et les fentes (38), comme représenté à la figure 4.

Ainsi le système de culture de l'invention permet de réduire le temps et la main d'oeuvre nécessaires pour le traitement des substrats entre les cultures et évite le séchage des pains ainsi que les opérations de désengainage et ré-engainage des pains puisque le substrat reste saturé entre les cultures et qu'il peut par conséquent rester en place entre les cultures.

Toutes modifications à la portée de l'homme de métier font également partie de l'esprit de l'invention.

## Revendications

1. Système de culture hors sol, constitué d'un substrat (1) minéral ou organique conformé en solide de forme appropriée, destiné à recevoir un ou plusieurs plants disposés sur la face supérieure (37), le substrat étant gainé dans un film polymère étanche (3) caractérisé en ce que la gaine (3) se prolonge dans le sens de la pente du sol sur lequel est posé le substrat, par un prolongement de dimension suffisante pour permettre son repliement sur la face supérieure du substrat afin de stopper le drainage et comporte des moyens de maintien des fentes de drainage sur la face supérieure du substrat.

2. Système de culture hors sol selon la revendication 1, caractérisé en ce que les moyens de maintien sont constitués par un piquet.

3. Système de culture hors sol selon la revendication 1, caractérisé en ce que les moyens de maintien sont du type adhésif.

4. Système de culture hors sol selon la revendication 1, caractérisé en ce que les moyens de maintien sont constitués par une soudure réalisée sur le prolongement de la gaine entre le substrat (1) et les fentes (38).

5. Système de culture hors sol selon la revendication 1, caractérisé en ce que les moyens de maintien sont constitués par un lien fixé sur les côtés (31, 33) du pain (1) à proximité de l'extrémité (11) et destinés à être noués sur la face supérieure (37) du pain ou sur la face latérale extrême (11).

6. Système de culture hors sol selon la revendication 1, caractérisé en ce que les moyens de maintien sont du type "velcro".

7. Système de culture hors sol selon la revendication 1, caractérisé en ce que les moyens de maintien sont constitués par une anse (36) dans laquelle vient se glisser le prolongement (340, 310, 330, 32) de la gaine (3) après qu'il ait été replié.

8. Système de culture hors sol selon la revendication 1, caractérisé en ce qu'un cordon passé dans un rebord en forme d'ourlet formé à l'extrémité de la gaine qui se prolonge au-delà du pain est utilisé pour fermer cette dernière.

9. Procédé d'utilisation du système de culture selon une des revendications 1 à 8, caractérisé en ce qu'il comporte les étapes suivantes
- mise en saturation du substrat ;
- découpe d'une fente dans le prolongement ; et
- en fin d'utilisation, fermeture du prolongement de la gaine et maintien de ce prolongement sur la face supérieure du substrat.

10. Procédé de réutilisation du système selon une des revendications précédentes, caractérisé en ce qu'il comporte, après une première utilisation du système pour la culture hors sol, les étapes suivantes :
- ouverture de l'extrémité de la gaine du système;
- stérilisation du système de culture à l'aide d'un liquide désinfectant ;
- rinçage du pain à l'eau claire ;
- fermeture de l'extrémité de la gaine pour mise en saturation ; et,
- ouverture de l'extrémité de la gaine pour remise en culture.
